# NEUE EUROPÄISCHE PATENTSCHRIFT

(11) **EP 1 754 913 B2**
(45) Veröffentlichungstag und Bekanntmachung des Hinweises auf die Entscheidung über den Einspruch: **29.05.2013**
(45) Hinweis auf die Patenterteilung: 26.08.2009
(21) Anmeldenummer: 06116342.4
(22) Anmeldetag: 29.06.2006
(51) Int. Cl.: F16H 53/02, F01L 1/04

(54) **Verstellbare Nockenwelle**
Adjustable camshaft
Arbre à cames réglable

(30) Priorität: 16.08.2005 DE 102005038656
(43) Veröffentlichungstag der Anmeldung: 21.02.2007
(73) Patentinhaber: Mahle International GmbH, 70376 Stuttgart (DE)
(72) Erfinder: Lechner, Martin, 70378 Stuttgart (DE); Prokop, Mario, 74172 Neckarsulm (DE); Schneider, Falk, 70825 Münchingen (DE)
(74) Vertreter: BRP Renaud & Partner

(56) Entgegenhaltungen:
- EP-A- 0 643 200
- WO-A1-94/19586
- WO-A1-2006/081788
- DE-A1- 1 362 986
- DE-A1- 3 531 890
- DE-A1- 19 757 504
- DE-A1-102005 014 680
- DE-B3-102004 009 074
- DE-C2- 19 606 732
- DE-U1- 7 920 957
- DE-U1- 29 922 876
- JP-A- 62 199 907

## Beschreibung

Die Erfindung bezieht sich auf eine verstellbare Nockenwelle mit den Merkmalen des Oberbegriffes des Anspruchs 1.

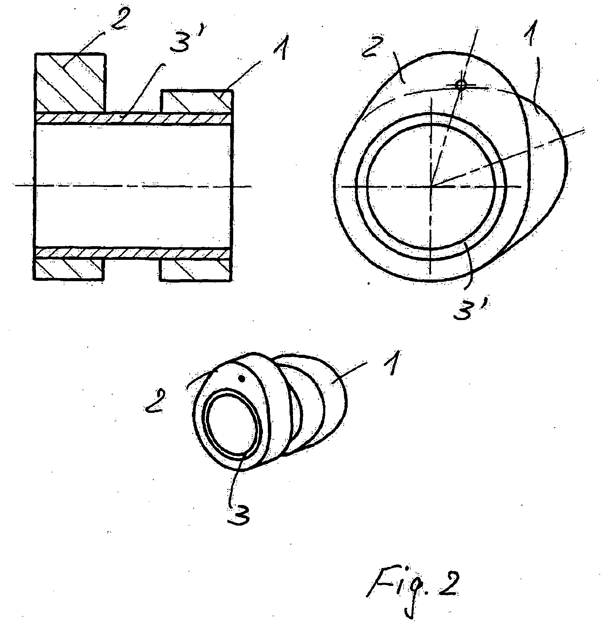

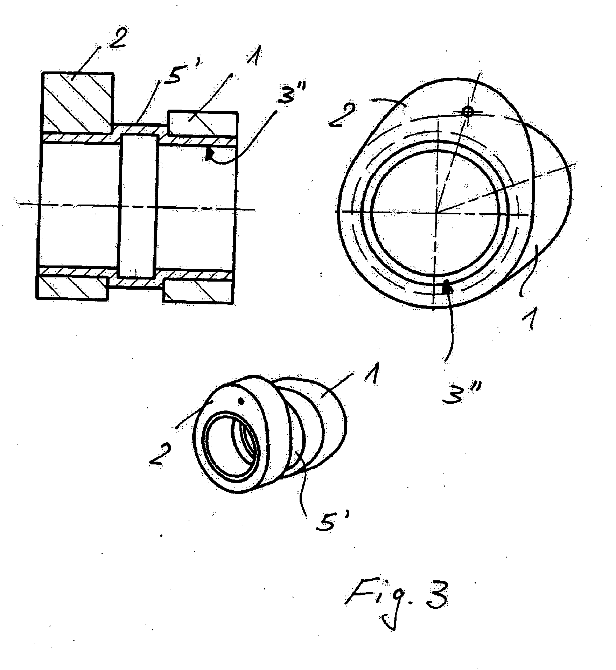

Eine derartige Nockenwelle wird in der EP 0 643 200 A1 dargestellt. Gemäß den Fig. 2 und 3 dieser Druckschrift besitzt die dort dargestellte verstellbare Nockenwelle eine innere Welle (3) und eine äußere Welle (1) auf der ein rohrförmiger Mehrfachnocken, welcher Einzelnocken 4 und 6 aufweist, drehbar gelagert ist.
Mittels eines Stiftes (7), welcher Radialöffnungen der äußeren Welle (1) durchsetzt, ist der Mehrfachnocken fest mit der inneren Welle (3) verstiftet.

Bei dieser bekannten verstellbaren Nockenwelle bildet der Mehrfachnocken ein einstückiges Formteil, dessen Herstellung aufwendig ist.

Die DE 10 2004 009 074 B3 zeigt lediglich einen rohrförmigen, gebauten Mehrfachnocken ohne jegliche Hinweise auf eine verstellbare Nockenwelle.

Die DE 299 22 876 U1 zeigt eine nicht verstellbare gebaute Nockenwelle, die im Wesentlichen aus einer Trägerwelle (1) und darauf angeordneten ringförmigen Einzelnocken (6) besteht, die an der Trägerwelle mittels Stifte (4) drehfest und axial fixiert gehaltert sind.

Aufgabe der Erfindung ist es nun, eine verstellbare Nockenwelle mit einfach herstellbaren und montierbaren Mehrfachnocken zu schaffen.

Diese Aufgabe wird durch die kennzeichnenden Merkmale des Anspruchs 1 gelöst.

Vorteilhafte und zweckmäßige Ausgestaltungen sind Gegenstand der Unteransprüche.

Im Zusammenhang mit verstellbaren Nockenwellen, bei denen die Mehrfachnocken gemäß dem Oberbegriff des Anspruches 1 mit der inneren Welle verstiftet sind, bietet die Erfindung den Vorteil, die Verstiftung ausschließlich innerhalb eines Bereiches des Trägerrohres des Mehrfachnockens vornehmen zu können. Bei einer solchen Ausführung kann das auf hohe Beanspruchungen auszulegende Material der Einzelnocken auf diese Elemente beschränkt werden, während solche Bereiche des Mehrfachnockens, die einerseits als Abstandshalter zwischen den Einzelnocken und andererseits als Widerlager für die Verstiftung dienen, aus einem anderen, insbesondere preisgünstiger bereitstellbaren Material bestehen können.

Eine Reihe alternativer Ausführungsformen der Erfindung sind in der Zeichnung dargestellt.

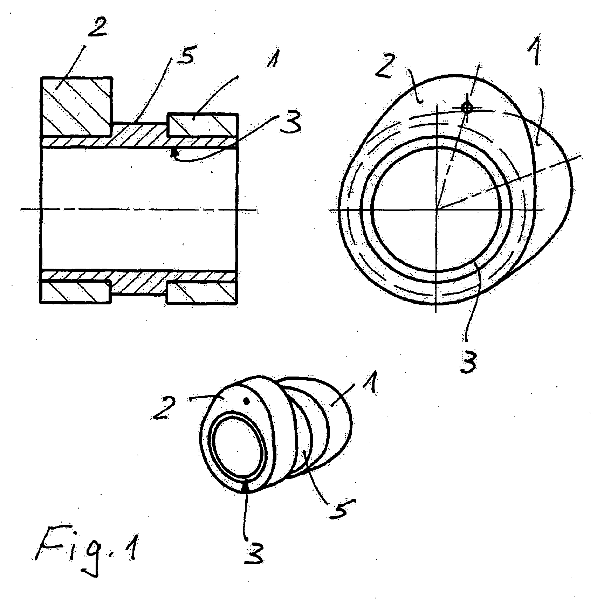

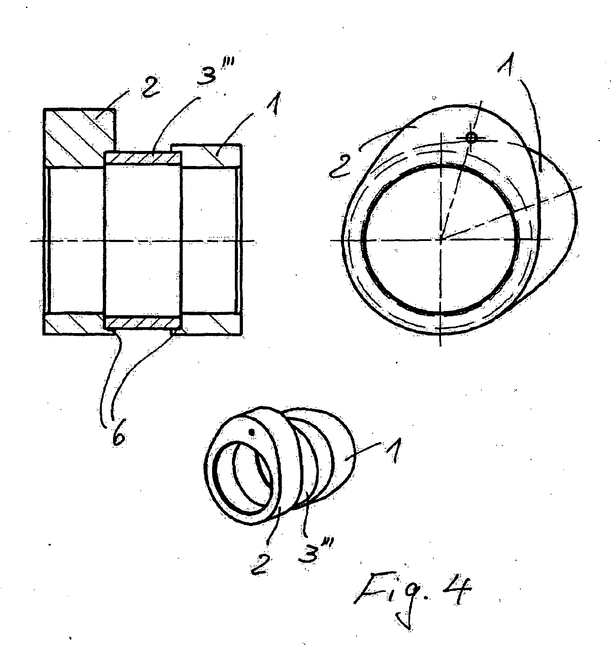

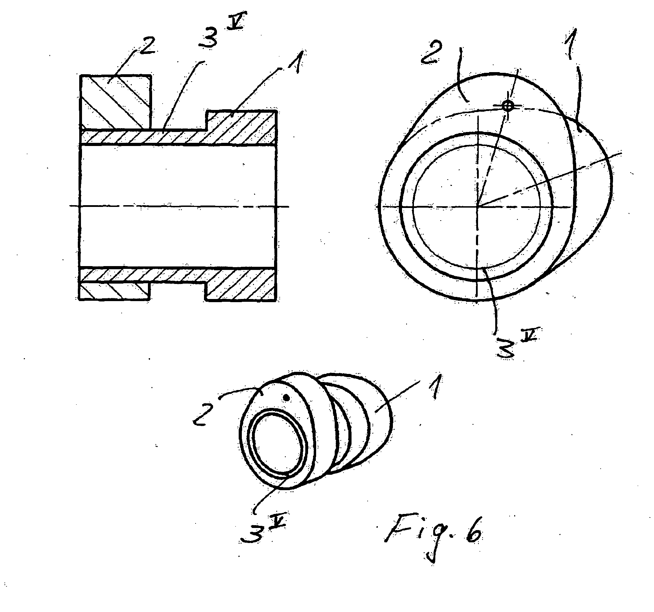

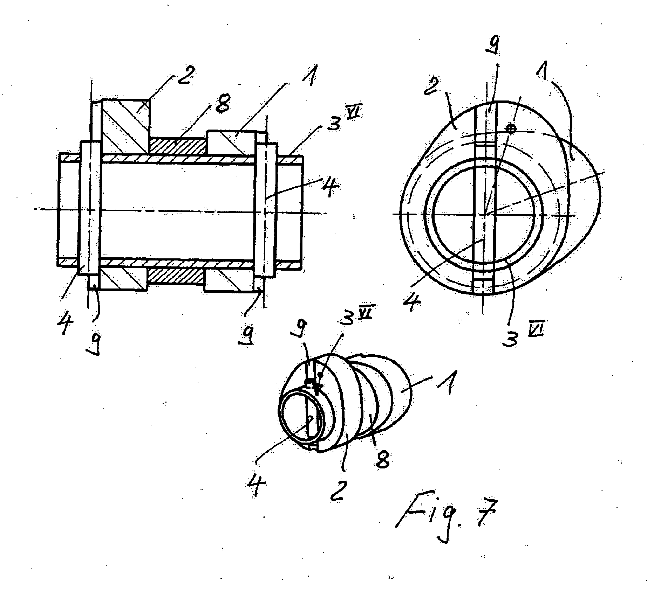

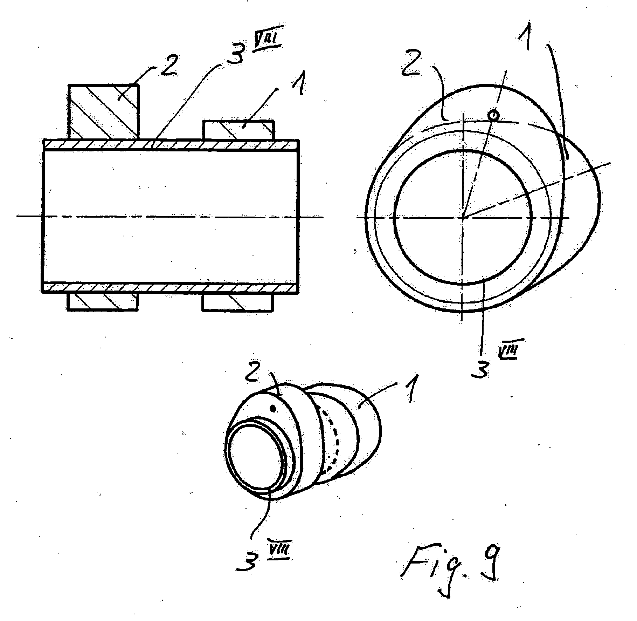

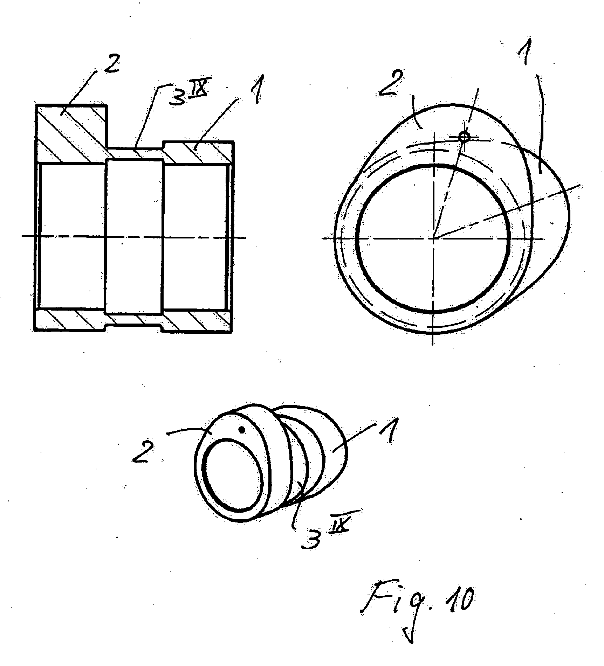

In dieser Zeigen
- Fig. 1 bis 10: jeweils eine unterschiedliche Ausbildung in jeweils einem Längsschnitt, einer Ansicht und einer perspektivischen Darstellung eines Mehrfachnockens.

In allen Ausführungsformen umfasst der jeweilige Mehrfachnocken zwei Einzelnocken, nämlich einen ersten Einzelnocken 1 und einen zweiten Einzelnocken 2, die über ein Trägerrohr 3 drehwinkelfest und axial unterschiedlich miteinander verbunden sind. Auf diese Elemente wird bei der nachfolgenden Beschreibung der einzelnen Ausführungsformen, die jeweils der Darstellung in einer der Figuren zugeordnet sein wird, jeweils unter gleichen Bezugszeichen Bezug genommen. Soweit diese Elemente unterschiedlich ausgebildet sind, werden diese unterschiedlichen Ausführungen jeweils mit unterschiedlichen Indizes bei im Übrigen gleichbleibender Bezugszahl gekennzeichnet werden.

Sämtliche in der Zeichnung gezeigte und nachfolgend beschriebenen Mehrfachnocken sind in erster Linie für eine verstellbare - in der Zeichnung nicht dargestellte - Nockenwelle bestimmt, bei der sie auf einer äußeren Welle gelagert und mit einer sich koaxial innerhalb dieser äußeren Welle befindlichen inneren Welle fest verstiftet sind. Die Bereiche, in denen eine Verstiftung über einen lediglich bei einzelnen Ausführungsbeispielen exemplarisch gezeigten Stift 4 erfolgt, liegen jeweils zwischen den Einzelnocken 1, 2 in einem Bereich eines Trägerrohres 3.

### Beschreibung der einzelnen Ausführungsformen unter Zuordnung zu der jeweils zugehörigen Figur. Fig. 1

Zwei Einzelnocken 1, 2 sind über ein Trägerrohr 3 miteinander verbunden. In der axialen Mitte dieses Trägerrohres 3 befindet sich ein nach radial außen abstehender Ringbund 5. Auf die durchmesserkleineren Endbereiche des Trägerrohres 3, deren Außenumfang jeweils kreisrund ist, ist jeweils ein Einzelnocken 1, 2 aufgezogen und über einen Presssitz mit dem Trägerrohr 3 fest verbunden. Der Presssitz kann durch eine Klebeverbindung zwischen den Einzelnocken 1, 2 und dem Trägerrohr 3 verstärkt werden. Der axiale Abstand zwischen den Einzelnocken 1, 2 wird durch den Ringbund 5 bestimmt. Wie bei allen nachfolgend beschriebenen Ausführungen können die Einzelnocken 1, 2 fertig bearbeitet mit vorbestimmten Drehwinkeln auf dem Trägerrohr 3 befestigt werden, so dass ein derartiger Mehrfachnocken in fertig bearbeiteter Form auf die äußere Welle einer verstellbaren Nockenwelle aufgesetzt werden kann und danach im Idealfall nicht mehr nachbearbeitet werden muss. Für die Einzelnocken 1, 2 einerseits und das Trägerrohr 3 andererseits können unterschiedliche Materialien eingesetzt werden. Dabei können auch die Einzelnocken 1, 2 aus unterschiedlichen Materialien bestehen, wenn für diese Einzelnocken 1, 2 unterschiedliche Betriebsbeanspruchungen auf einer Nockenwelle gegeben sind.

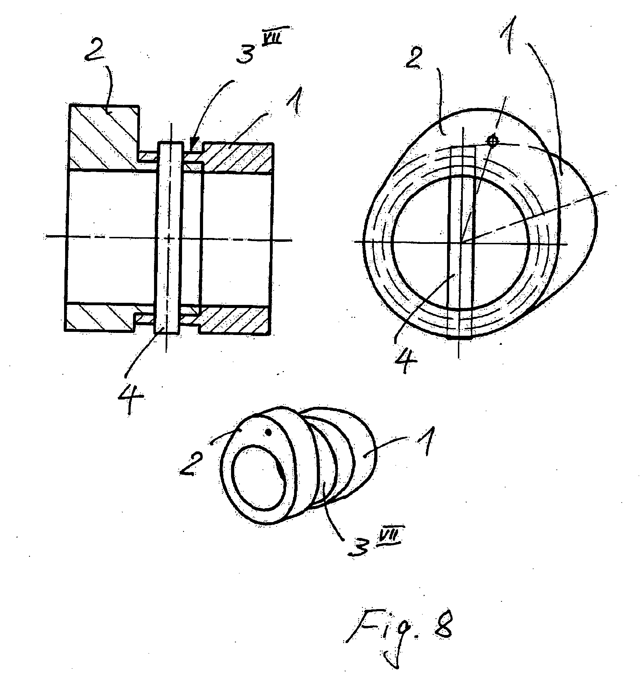

Für eine Befestigung eines derartigen Mehrfachnockens, der bei einer verstellbaren Nockenwelle auf der äußeren Welle gelagert ist, mit der inneren Welle kann eine Verstiftung radial durch den Bereich des Ringbundes 5 erfolgen. Eine solche Art der Verstiftung kann insbesondere der Fig. 8 dem Prinzip nach entnommen werden.

### Fig. 2

Diese Ausführung unterscheidet sich von derjenigen nach Fig. 1 im Wesentlichen dadurch, dass das Trägerrohr 3' keinen äußeren Ringbund 5 aufweist. Darüber hinaus wird insbesondere mit Bezug auf dieses Ausführungsbeispiel bemerkt, dass die Befestigung der Einzelnocken 1, 2 auf dem Trägerrohr 3, 3' oder allen nachfolgend noch beschriebenen weiteren Trägerrohr-Ausführungen in einer beliebigen Verbindungsart aus den, einem Fachmann bekannten Möglichkeiten bestehen kann. So können alternativ oder kumulativ die Einzelnocken 1, 2 mit dem Trägerrohr 3 in einem Presssitz verbunden sein, durch Schweißen, Löten, Kleben und/oder durch einen Formschluss.

### Fig. 3

Bei dieser Ausführung ist ein Trägerrohr 3" eingesetzt, dessen äußerer Ringbund 5' aus dem Trägerrohr 3 ausgeformt ist durch beispielsweise eine Umformung des Trägerrohres 3" in einem Hochdruck-Innenumformverfahren. In dem Bereich des Ringbundes 5' besitzt das Trägerrohr 3" einen durchmessermäßig erweiterten Innenumfangsbereich. Bei einer Verstiftung eines solchen Mehrfachnockens auf der äußeren Welle einer Nockenwelle hat ein solcher, erweiterter Innendurchmesserbereich den Vorteil, dass eine radiale Bohrung in dem Ringbund 5', durch die eine Verstiftung erfolgen kann, durch einen eventuellen, fertigungsbedingten Grat am Innenumfang des Ringbundes 5 beim Fügen des Mehrfachnockens auf der äußeren Welle einer verstellbaren Nockenwelle nicht störend wirken kann. Wegen des zuletzt genannten Vorteiles eines durchmessermäßig erweiterten Innenumfangsbereiches eines Ringbundes 5 kann eine solche Trägerrohrausbildung auch durch Bearbeitung eines Trägerrohrs 3 aus Vollmaterial vorgesehen werden.

### Fig. 4

Bei dieser Ausführung durchzieht ein Trägerrohr 3''' nicht die Innenumfangsbereiche der Einzelnocken 1, 2. Dieses Trägerrohr 3''' ist vielmehr im Wesentlichen lediglich axial zwischen den Einzelnocken 1, 2 angebracht. In den Einzelnocken 1, 2 sind zur Aufnahme des Trägerrohres 3''' jeweils an der Innenkante der angrenzenden Stirnseiten nach radial innen offene Ringnuten 6 vorgesehen. Im Bereich dieser Ringnuten 6 übergreifen die Einzelnocken 1, 2 das Trägerrohe 3''' jeweils in den zugehörigen Bereichen der Ringnuten 6. Die Verbindung zwischen den Einzelnocken 1, 2 und dem Trägerrohr 3''' kann in üblicher Weise alternativ oder kumulativ durch Schweißen, Löten, Kleben oder Vorsehen eines Presssitzes geschehen.

### Fig. 5

Als Trägerrohr 3^{IV} ist ein solches eingesetzt, das an einem axialen Ende mit einem radial nach außen abstehenden Ringflansch 7 versehen ist. Zur Abstandshalterung der beiden auf dieses Trägerrohr 3^{IV} aufgezogenen Einzelnocken 1, 2 dient ein ebenfalls aufgeschobener Distanzring 8. An dem dem Ringflansch 7 entgegengesetzten Ende des Trägerrohres 3^{IV} kann ein Stift 4 durch dort in dem Trägerrohr 3^{IV} vorgesehene radiale Bohrungen eingesetzt werden. Dabei können die Bohrungen für den Stift 4 in axialer Richtung des Trägerrohrs 3^{IV} derart angeordnet sein, dass sie in den Bereich eines benachbarten ersten Einzelnockens 1, 2 eingreifen. In diesem Fall ist der betreffende Einzelnocken 1, 2 mit radial verlaufenden Rillen 9 versehen, die der Bohrung für den Stift 4 zugeordnet sind. Durch Eingriff des Stiftes 4 in diese radialen Rillen 9 ergibt sich zwischen dem Stift 4 und dem benachbarten Einzelnocken ein verdrehsicherer Formschluss. Durch eine entsprechende Ausrichtung in axialer Richtung des Trägerrohres 3^{IV} kann durch den Stift 4 auch eine axiale Verspannung der Einzelnocken 1, 2 einschließlich des Distanzringes 8 erreicht werden. Um in axialer Richtung des Trägerrohres 3^{IV} eine Verspannung erzielen zu können, kann es vorteilhaft sein, bei der Montage des Stiftes 4 einen Temperaturunterschied zwischen dem Stift 4 und den übrigen Elementen, insbesondere dem Trägerrohr 3^{IV} vorzusehen.

### Fig. 6

Bei dieser Ausführungsform ist das Trägerrohr 3^{V} Bestandteil einer der beiden Einzelnocken 1, 2. Die Befestigung des Einzelnockens 1 bzw. 2, der nicht fester Bestandteil mit dem Trägerrohr 3^{V} ist, erfolgt auf diesem Trägerrohr 3^{V} in einer Weise, wie sie bei den anderen Ausführungsbeispielen bereits beschrieben ist.

### Fig. 7

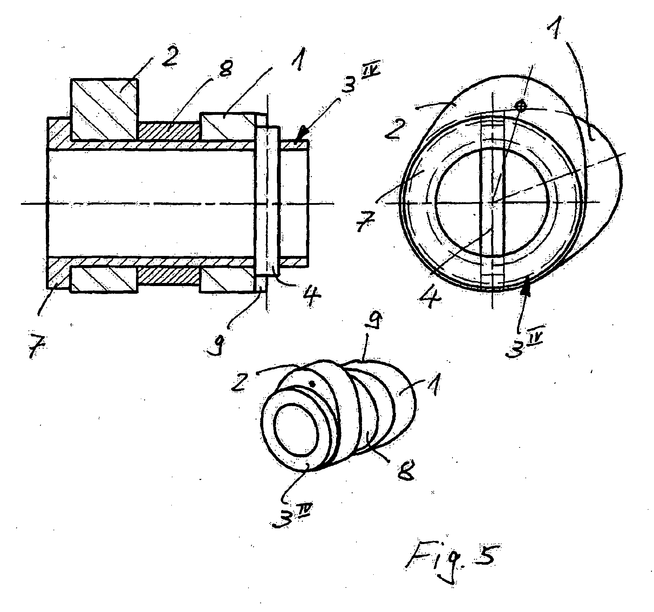

Diese Ausführung eines gefügten Mehrfachnockens unterscheidet sich von derjenigen nach Fig. 5 lediglich dadurch, dass hier das Trägerrohr 3^{VI} beidseitig derart ausgebildet und mit den Einzelnocken 1, 2 so verbunden ist, wie dies bei der Ausführung nach Fig. 5 mit Hilfe des Stiftes 4 erfolgt ist.

### Fig. 8

Bei dieser Ausführung ist an jedem der beiden Einzelnocken 1, 2 ein Bestandteil eines Trägerrohres 3^{VII} angeformt. Die angeformten Teile des Trägerrohres 3^{VII} sind formmäßig derart gestaltet, dass sie teleskopartig ineinander schiebbar sind. Bei einer erforderlichen Verstiftung mit einer inneren Welle einer verstellbaren Nockenwelle kann der Stift 4 durch die teleskopartig ineinander geschobenen Einzelbereiche des Trägerrohres 3^{VII} hindurchgeführt werden. Die Einzelnocken 1, 2 sind nach erfolgter Verstiftung ausschließlich durch diese Verstiftung gegeneinander ausgerichtet und fixiert. Die beiden jeweils von den Einzelnocken 1, 2 ausgehenden Einzelbereiche des Trägerrohres 3^{VII} können im übrigen nach einer der vorstehend bei den anderen Verbindungsarten angegebenen Möglichkeiten miteinander verbunden sein, das heißt, insbesondere miteinander verschweißt, verlötet und/oder verklebt sein.

### Fig. 9

Diese Ausführungsvariante entspricht derjenigen nach Fig. 2 mit lediglich dem Unterschied, dass das Trägerrohr 3^{VIII} die Einzelnocken 1, 2 an seinen Enden axial überragt.

### Fig. 10

Bei dieser Ausführungsform ist das Trägerrohr 3^{IX} fester Bestandteil der Einzelnocken 1, 2. Dieser Mehrfachnocken kann in dieser Form urgeformt, umgeformt oder durch Zerspanung hergestellt werden. Der radiale Innenumfang des Trägerrohres 3^{IX} besitzt einen gegenüber den angrenzenden Einzelnocken 1, 2 geringfügig vergrößerten Innendurchmesser. Dieser Bereich mit einem vergrößerten Innendurchmesser bietet die Vorteile, die bereits bei einem Trägerrohr 3 mit einem entsprechend vergrößerten Innenumfang bei der Ausführung nach Fig. 3 angegeben worden sind.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Verstellbare Nockenwelle mit zwei konzentrisch ineinander gelagerten Wellen, nämlich einer inneren und einer äußeren Welle, wobei ein rohrförmiger Mehrfachnocken (1, 2, 3) der mehrere Einzelnocken umfasst auf der äußeren Welle drehbar gelagert und über in der äußeren Welle vorgesehene Radialöffnungen hindurch fest mit der inneren Welle verstiftet ist, wobei die Einzelnocken (1, 2) vorgefertigt sind, und als Nockenring auf dem Außenumfang eines Trägerrohres (3) axial beabstandet von einem benachbarten Einzelnocken (2, 1) aufgezogen und mit diesem Trägerohr (3) in vorgegebener Drehwinkelzuordnung und vorgegebener axialer Abstandszuordnung zum benachbarten Einzelnocken (2, 1) fest verbunden sind,
**dadurch gekennzeichnet,**
**dass** das Trägerrohr (3) in seinem mindestens einen Verstiftungsbereich einen gegenüber axial benachbarten Bereichen größeren Innendurchmesser aufweist.

2. Nockenwelle nach Anspruch 1,
**dadurch gekennzeichnet,**
**dass** der mindestens eine Einzelnocken (1, 2) auf einen kreiszylindrischen Umfangsbereich des Trägerrohres (3) aufgezogen ist.

3. Verstellbare Nockenwelle mit zwei konzentrisch ineinander gelagerten Wellen, nämlich einer inneren und einer äußeren Welle, wobei ein rohrförmiger Mehrfachnocken (1, 2, 3) der mehrere Einzelnocken umfasst auf der äußeren Welle drehbar gelagert und über in der äußeren Welle vorgesehene Radialöffnungen hindurch fest mit der inneren Welle verstiftet ist, wobei die Einzelnocken (1, 2) auf dem Außenumfang eines Trägerrohres (3) axial beabstandet von einem benachbarten Einzelnocken (2, 1) auftreten und it diese Trägerrohr (3) in vorgegebener Drehwinkelzuordnung und vorgegebener axialer Abstandszuordnung zum benachbarten Einzelnocken (2, 1) fest verbunden sind, und wobei das Trägerrohr (3) mit einem der Einzelnocken (1, 2) einstückig ausgebildet und hergestellt,
**dadurch gekennzeichnet,**
**dass** das Trägerrohr (3) in seinem mindestens einen Verstiftungsbereich einen gegenüber axial benachbarten Bereichen größeren Innendurchmesser aufweist.

4. Nockenwelle nach einem der vorhergehenden Ansprüche,
**dadurch gekennzeichnet,**
**dass** ein axialer Abstand zwischen zwei Einzelnocken (1, 2) durch einen an dem Trägerrohr (3) axial vorgesehenen Ringbund (5) festgelegt ist.

5. Nockenwelle nach einem der vorhergehenden Ansprüche,
**dadurch gekennzeichnet,**
**dass** das Trägerrohr (3) mindestens eine außerhalb der von den Einzelnocken (1, 2) eingenommenen Umfangsbereiche liegende radiale Öffnung für ein Verstiften des Mehrfachnockens mit der inneren Welle der verstellbaren Nockenwelle besitzt.

6. Nockenwelle nach einem der vorhergehenden Ansprüche,
**dadurch gekennzeichnet,**
**dass** axiale Abstände zwischen Einzelnocken (1, 2) durch auf das Tragrohr (3) jeweils aufgezogene Distanzringe (8) gehalten werden.

7. Nockenwelle nach einem der vorhergehenden Ansprüche,
**dadurch gekennzeichnet,**
**dass** in das Trägerrohr (3) zu dessen Verstiftung mit der inneren Welle der verstellbaren Nockenwelle einsetzbare Stifte (4) im eingesetzten Zustand gleichzeitig axiale und/oder Drehwinkel-Fixierfunktion für mindestens einen der Einzelnocken (1, 2) ausüben.

8. Nockenwelle nach einem der vorhergehenden Ansprüche,
**dadurch gekennzeichnet,**
**dass** der Ringbund (5) des Trägerrohres (3) ein Bereich ist, der an dem Trägerrohr (3) durch ein Innenhochdruck-Umformverfahren erzeugt ist.

9. Verstellbare Nockenwelle mit zwei konzentrisch ineinander gelagerten Wellen, nämlich einer inneren und einer äußeren Welle, wobei ein rohrförmiger Mehrfachnocken (1, 2, 3), der mehrere Einzelnocken umfasst, auf der äußeren Welle drehbar gelagert und über in der äußeren Welle vorgesehene Radialöffnungen hindurch fest mit der inneren Welle verstiftet ist, wobei die Einzelnocken (1, 2) vorgefertigt sind und auf dem Außenumfang eines Trägerrohres (3) axial beabstandet von einem benachbarten Einzelnocken (2,1) auftreten und mit diesem Trägerrohr (3) in vorgegebener Drehwinkelzuordnung und vorgegebener axialer Abstandszuordnung zum benachbarten Einzelnocken (2, 1) fest verbunden sind, wobei zwei benachbarte Einzelnocken (1, 2) jeweils ein angeformtes Teilstück eines Trägerrohres (3) aufweisen, wobei diese Teilstücke bei gefügten Einzelnocken (1, 2) teleskopartig ineinander greifen,
**dadurch gekennzeichnet,**
**dass** das Trägerrohr in seinem mindestens einen Verstiftungsbereich einen gegenüber axial benachbarten Bereichen größeren Innendurchmesser aufweist.

10. Nockenwelle nach Anspruch 3,
**dadurch gekennzeichnet,**
**dass** das Trägerrohr mit zwei Einzelnocken (1, 2) einstückig ausgebildet und hergestellt ist.

## Claims

1. An adjustable camshaft comprising two shafts that are concentrically mounted one inside the other, namely an inner and an outer shaft, wherein a tubular multiple cam (1, 2, 3), which comprises a plurality of individual cams, is rotatably mounted on the outer shaft and is fixedly pinned to the inner shaft through radial openings provided on the outer shaft, wherein the individual cams (1, 2) are pre-manufactured and mounted as a cam ring on the exterior circumference of a mounting tube (3) axially spaced apart from an adjacent individual cam (2, 1) and are fixedly connected to this mounting tube (3) in a predetermined rotation angle allocation and in a predetermined axial distance allocation to the adjacent individual cam (2, 1),
**characterised in**
**that** the mounting tube (3), in its at least one pinned fitting region, has in inner diameter that is larger with respect to axially adjacent regions.

2. The cam shaft as specified in claim 1,
**characterised in**
**that** the at least one individual cam (1, 2) is mounted on a circularly cylindrical circumferential region of the mounting tube (3).

3. The adjustable camshaft, comprising two shafts that are concentrically mounted one inside the other, namely an inner and an outer shaft, wherein a tubular multiple cam (1, 2, 3), which comprises a plurality of individual cams, is rotatably mounted on the outer shaft and is fixedly pinned to the inner shaft through radial openings provided on the outer shaft, wherein the individual cams (1, 2) on the outer circumference of a mounting tube (3) are provided axially spaced apart from an adjacent individual cam (2, 1) and are fixedly connected to this mounting tube (3) in a predetermined rotation angle allocation and in a predetermined axial distance allocation to the adjacent individual cam (2, 1), and wherein the mounting tube (3) is integrally formed and manufactured with one of the individual cams (1, 2),
**characterised in**
**that** the mounting tube (3), in its at least one pinned fitting region, has in inner diameter that is larger with respect to axially adjacent regions.

4. The camshaft as specified in any one of the preceding claims,
**characterised in**
**that** an axial distance between two individual cams (1, 2) is determined by means of a bundled coil (5) axially provided on the mounting tube (3).

5. The camshaft as specified in any one of the preceding claims,
**characterised in**
**that** the mounting tube (3) has at least one radial opening, which is positioned outside the circumferential regions engaged by the individual cams (1, 2), for pinning the multiple cam with an inner shaft of the adjustable camshaft.

6. The cam shaft as specified in any one of the preceding claims,
**characterised in**
**that** axial distances between individual cams (1, 2) are maintained in each case by distance rings (8) mounted on the mounting tube (3).

7. The camshaft as specified in any one of the preceding claims,
**characterised in**
**that** pins (4) that can be inserted into the mounting tube (3) for pinning it with the inner shaft of the adjustable camshaft perform in the inserted state an axial fixing function and/or a rotation angle fixing function at the same time for at least one of the individual cams (1, 2).

8. The camshaft as specified in any one of the preceding claims,
**characterised in**
**that** the bundled coil (5) of the mounting tube (3) is a region that is generated on the mounting tube (3) by an internal high pressure process.

9. The adjustable camshaft comprising two shafts that are concentrically mounted one inside the other, namely an inner and an outer shaft, wherein a tubular multiple cam (1, 2, 3), which comprises a plurality of individual cams, is rotatably mounted on the outer shaft and is fixedly pinned to the inner shaft through radial openings provided on the outer shaft, wherein the individual cams (1, 2) are pre-manufactured and provided on the exterior circumference of a mounting tube (3) axially spaced apart from an adjacent individual cam (2, 1), and are fixedly connected to this mounting tube (3) in a predetermined rotation angle allocation and in a predetermined axial distance allocation to the adjacent individual cam (2, 1), wherein two adjacent individual cams (1, 2) each have an integrally formed part of a mounting tube (3), wherein these parts engage with each other in a telescoping manner when individual cams (1, 2) are joined,
**characterised in**
**that** the mounting tube, in its at least one pinned fitting region, has an inner diameter that is larger with respect to axially adjacent regions.

10. The camshaft as specified in claim 3,
**characterised in**
**that** the mounting tube is integrally formed and manufactured with two individual cams (1, 2).

## Revendications

1. Arbre à cames réglable comportant deux arbres positionnés concentriquement l'un dans l'autre, à savoir un arbre intérieur et un arbre extérieur, dans lequel une came multiple (1, 2, 3) tubulaire qui comprend plusieurs cames individuelles est positionnée rotativement sur l'arbre extérieur et est assemblée par goujon solidement à l'arbre intérieur par l'intermédiaire d'ouvertures radiales prévues dans l'arbre extérieur, dans lequel les cames individuelles (1, 2) sont préfabriquées et sont enfilées comme anneau de came sur la circonférence extérieure d'un tube porteur (3) en étant espacées axialement d'une came individuelles voisine (2, 1) et sont solidement reliées à ce tube porteur (3) dans une coordination d'angle de rotation prescrite et dans une coordination d'espacement axial prescrite par rapport à la came individuelle voisine (2, 1), **caractérisé en ce que** le tube porteur (3) présente dans au moins une zone d'assemblage par goujon un diamètre intérieur plus grand par rapport aux zones voisines axialement.

2. Arbre à cames selon la revendication 1, **caractérisé en ce que** au moins une des cames individuelles (1, 2) est enfilée sur une zone circonférentielle circulaire du tube porteur (3).

3. Arbre à cames réglable comportant deux arbres positionnés concentriquement l'un dans l'autre, à savoir un arbre intérieur et un arbre extérieur, dans lequel une came multiple tubulaire (1, 2, 3) qui comprend plusieurs cames individuelles est positionnée rotativement sur l'arbre extérieur et est assemblée par goujon solidement avec l'arbre intérieur par l'intermédiaire d'ouvertures radiales prévues dans 'l'arbre extérieur, dans lequel les cames individuelles (1, 2) sont présentes sur la circonférence extérieure d'un tube porteur (3) en espacement axial par rapport à une came individuelle voisine (2, 1) et sont reliées solidement à ce tube porteur (3) dans une coordination d'angle de rotation prescrite et dans une coordination d'espacement axial prescrite par rapport à la came individuelle voisine (2, 1), et dans lequel le tube porteur (3) est réalisé et fabriqué en un seul tenant avec une des cames individuelles (1, 2), **caractérisé en ce que** le tube porteur (3) présente dans au moins sa zone d'assemblage par goujon un diamètre intérieur plus grand par rapport aux zones axiales voisines.

4. Arbre à cames selon une des revendications précédentes, **caractérisé en ce que** un espacement axial entre deux cames individuelles (1, 2) est déterminé par un collet annulaire (5) prévu axialement sur le tube porteur (3).

5. Arbre à cames selon une des revendications précédentes, **caractérisé en ce que** le tube porteur (3) possède au moins une ouverture radiale située à l'extérieur des zones périphériques occupées par les cames individuelles (1, 2) en vue d'un assemblage par goujon avec l'arbre intérieur de l'arbre à cames réglable.

6. Arbre à cames selon une des revendications précédentes, **caractérisé en ce que** les espacements axiaux entre les cames individuelles (1, 2) sont maintenus par les bagues d'écartement (8) respectivement enfilées sur le tube porteur (3).

7. Arbre à cames selon une des revendications précédentes, **caractérisé en ce que** des goupilles (4) à insérer dans le tube porteur (3) en vue de son assemblage par goujon avec l'arbre intérieur de l'arbre à cames réglable exercent en l'état monté simultanément une fonction de fixation axiale et/ou à angle de rotation pour au moins une des cames individuelles (1, 2).

8. Arbre à cames selon une des revendications précédentes, **caractérisé en ce que** le collet annulaire (5) du tube porteur (3) est une zone, qui est produite sur le tube porteur (3) par un procédé de façonnage à haute pression interne.

9. Arbre à cames réglable comportant deux arbres positionnés concentriquement l'un dans l'autre, à savoir un arbre intérieur et un arbre extérieur, dans lequel une came multiple tubulaire (1, 2, 3) qui présente plusieurs cames individuelles, est positionnée rotativement sur l'arbre extérieur et est assemblé par goujon solidement à l'arbre intérieur par l'intermédiaire d'ouvertures radiales prévues dans l'arbre extérieur, dans lequel les cames individuelles (1, 2) sont préfabriquées et se présentent sur la circonférence extérieure d'un tube porteur (3) en espacement axial par rapport à une came individuelle voisine (2, 1) et sont reliées solidement à ce tube porteur (3) dans une coordination d'angle de rotation prescrite et dans une coordination d'espacement axial prescrite par rapport à la came individuelle voisine (2, 1), dans lequel deux cames individuelles (1, 2) présentent respectivement une pièce partielle façonnée d'un tube porteur (3), dans lequel ces pièces partielles s'engagent l'une dans l'autre de manière télescopique quand les cames individuelles (1, 2) sont assemblées, **caractérisé en ce que** le tube porteur présente dans au moins sa zone d'assemblage par goujon un diamètre intérieur plus grand par rapport aux zones axiales voisines.

10. Arbre à cames selon la revendication 3, **caractérisé en ce que** le tube porteur est réalisé et fabriqué en un seul tenant avec deux cames individuelles (1, 2).
